# EUROPÄISCHE PATENTSCHRIFT

(11) **EP 1 460 506 B1**
(45) Veröffentlichungstag und Bekanntmachung des Hinweises auf die Patenterteilung: **13.06.2007**
(21) Anmeldenummer: 04001410.2
(22) Anmeldetag: 23.01.2004
(51) Int. Cl.: G05D 23/19, G01K 1/20

(54) **Verfahren zur Messung der Raumtemperatur**
Method for measuring the room temperature
Procédé pour mesurer la température ambiante

(30) Priorität: 20.03.2003 DE 10312374
(43) Veröffentlichungstag der Anmeldung: 22.09.2004
(73) Patentinhaber: ROBERT BOSCH GMBH, 70442 Stuttgart (DE)
(72) Erfinder: Kessler, Arno, 35649 Bischoffen (DE); Klein, Rudolf, 35457 Lollar (DE); Schreiner, Rafael, 35683 Dillenburg (DE)

(56) Entgegenhaltungen:
- DE-A- 19 936 418
- DE-C- 19 728 803
- US-A- 4 347 443

## Beschreibung

Die Erfindung betrifft ein Verfahren zur Messung der Raumtemperatur für eine Regelung einer Heizungsanlage nach dem Oberbegriff des Patentanspruches 1.

Üblicherweise sind an die Regelung einer Heizungsanlage Fernbedienungsgeräte angeschlossen, um den Nutzern eines Gebäudes die Bedienung der Heizungsanlage von einem Raum aus zu ermöglichen. Für einen vollautomatischen Betrieb von bekannten Heizungsanlagen sind außerdem diverse Messwerte erforderlich, nach denen die erzeugte Wärmeleistung und/oder die in die Räume eingebrachte Wärmeenergie geregelt wird. Dazu gehört auch die Raumtemperatur, denn diese ist maßgebend für die Rückmeldung zur Regelung der Heizungsanlage, insbesondere in Bezug auf die tatsächlichen Verhältnisse gegenüber den vom Nutzer eingestellten Sollwerten.

In der Regel werden Raumtemperaturfühler in das Gehäuse eines Fernbedienungsgerätes integriert, damit einerseits nur ein einziges Bauteil in einem Raum montiert und an die Regelung angeschlossen werden muss. Andererseits ist das Fühlerelement dort auch gegenüber mechanischen Einflüssen geschützt. Im relativ kompakten Gehäuse eines Fernbedienungsgerätes befinden sich allerdings Wärme erzeugende elektronische Bauteile, wie zum Beispiel ein Spannungsregler und/oder ein Display mit Hintergrundbeleuchtung. Sobald diese Bauteile selbst bzw. die daran angeschlossenen elektrischen Verbraucher eingeschaltet werden, kommt es im Inneren des Gehäuses zu einer Wärmeentwicklung. Dabei speichern die Bauteile zudem noch einen Teil der Wärme, so dass auch ein Abschalten eines Bauteils nur zu einer verzögerten Abkühlung führt.

Sobald der Raumtemperaturfühler mit Fremdwärme beaufschlagt wird, verfälscht sich somit der gemessene Wert der Raumtemperatur. Selbst geringfügige Abweichungen des gemessenen Wertes vom tatsächlich vorhandenen, aktuellen Wert der Raumtemperatur, können möglicherweise zu einer ungünstigeren Regelstrategie oder zu Komforteinbußen für die Nutzer im Raum führen. Dies ist natürlich generell stark von gebäude- und anlagenspezifischen Gegebenheiten abhängig. Beispielsweise identifiziert die Regelung Fremdwärme am Raumtemperaturfühler als steigende Raumtemperatur und senkt dann die Heizkurve oder den Temperatur-Sollwert für den Raum ab, obwohl tatsächlich weiter geheizt werden müsste.

Aus der DE 197 28 803 C1 ist eine Anordnung zur Temperaturmessung bekannt, bei der sich in einem Gehäuse neben mindestens einer Wärmequelle ein Haupt- und ein Hilfstemperaturfühler befinden. Der Hilfstemperaturfühler ist zwischen der Wärmequelle dem Haupttemperaturfühler positioniert und über einen Rechner wird die tatsächliche Temperatur ermittelt, welche somit trotz der im Gehäuse möglichen Übertemperaturen eine höhere Genauigkeit aufweist. Weiterhin offenbart die US 4 347 443 ein Gehäuse eines Raumthermostaten mit elektrotechnischen Bauteilen, welches an der Ober- und Unterseite Lüftungsschlitze besitzt, um eine möglichst gute Durchströmung im Inneren zu erreichen. Aus der DE 199 36 418 A1 ist es zudem bekannt, bei einer Anzeige eines Gargerätes in einer so genannten Restwärmephase die Isttemperaturwerte auf einen vorgegebenen Solltemperaturwert zu begrenzen, um einen höheren Informationsgehalt zu erzielen.

Der Erfindung liegt daher die Aufgabe zu Grunde, ein möglichst genaues, einfaches Verfahren zur Messung der Raumtemperatur für eine Regelung einer Heizungsanlage mit einem Fernbedienungsgerät zu schaffen, und dabei die Beeinflussbarkeit der Messwerte durch Wärme erzeugende elektronische Bauteile innerhalb des Gehäuses des Fernbedienungsgerätes zu minimieren.

Erfindungsgemäß wurde dies mit den Merkmalen des Patentanspruches 1 gelöst. Vorteilhafte Weiterbildungen sind den Unteransprüchen zu entnehmen.

Das Verfahren zur Messung der Raumtemperatur für eine Regelung einer Heizungsanlage ist dadurch gekennzeichnet, dass mit dem Einschalten mindestens eines Wärme erzeugenden elektronischen Bauteils, und/oder eines daran angeschlossenen Stromverbrauchers als elektrische Last, der zu diesem Zeitpunkt gemessene Wert der Raumtemperatur gespeichert wird und so lange in die Regelung einfließt, bis bei einem fallenden Wert der Raumtemperatur die Regelung wieder nach dem aktuell gemessenen Wert der Raumtemperatur arbeitet.

Die Umschaltung vom gespeicherten Wert auf den aktuell gemessenen Wert der Raumtemperatur erfolgt generell bei einem fallenden Wert der gemessenen Raumtemperatur und nach der Abschaltung des mindestens einen Wärme erzeugenden elektronischen Bauteils und/oder eines daran angeschlossenen Stromverbrauchers als elektrische Last. Denn selbst wenn die Raumtemperatur dann parallel steigen würde, käme es zunächst im Inneren des Gehäuses zu einem Temperaturabfall beim Wegfall der Wärmestrahlung.

Bei einer bevorzugten Verfahrensweise kommt es erst zur Umschaltung vom gespeicherten Wert auf den aktuell gemessenen Wert der Raumtemperatur, wenn sich der aktuell gemessene Wert an den gespeicherten Wert bis auf eine Differenz von vorzugsweise etwa 0,2 Kelvin angenähert hat. Dazu wird der gespeicherte Wert der Raumtemperatur nach dem Abschalten des mindestens einen Wärme erzeugenden elektronischen Bauteils und/oder eines daran angeschlossenen Stromverbrauchers als elektrische Last allmählich wieder an den aktuell gemessenen Wert der Raumtemperatur angepasst, dass heißt langsam erhöht. Somit steht nach dem Schaltimpuls, welcher das Verfahren in Gang setzt, dem fallenden, aktuell gemessenen Wert der Raumtemperatur immer ein steigender, für die Regelung maßgebender Wert durch diese Anpassung gegenüber. Beide Werte kommen sich also entgegen. Dazu erfolgt die Anpassung bzw. langsame Erhöhung des gespeicherten Wertes der Raumtemperatur mit einer Zeitkonstante von vorzugsweise etwa 13 Minuten. Sofern die Raumtemperatur am Display des Fernbedienungsgerätes angezeigt werden soll, wird dafür der gespeicherte Wert der Raumtemperatur solange verwendet, wie dieser für die Regelung maßgebend ist.

Zur Durchführung des Verfahrens reicht es aus, wenn der elektrische Anschluss des mindestens einen Wärme erzeugenden elektronischen Bauteiles und/oder eines daran angeschlossenen Stromverbrauchers als elektrische Last, insbesondere der Ausgang eines Spannungsreglers und/oder der Netzanschluss eines beleuchteten Displays im Gehäuse des Fernbedienungsgerätes, derart mit der Regelung einer Heizungsanlage verknüpft ist, dass durch das Einschalten des Bauteiles ein Signal erzeugt wird. Dadurch wird die Speicherung des zu diesem Zeitpunkt gemessenen Wertes der Raumtemperatur mit dem nachfolgenden Überwachungs-, Auswerte- bzw. Umschaltverfahren ausgelöst.

Mit dem erfindungsgemäßen Verfahren und der dazu gehörenden Anordnung wird ein einfaches, aber genaues Verfahren zur Messung der Raumtemperatur für eine Regelung einer Heizungsanlage mit einem Fernbedienungsgerät geschaffen. Die Beeinflussbarkeit der Messwerte durch Wärme erzeugende elektronische Bauteile innerhalb des Gehäuses des Fernbedienungsgerätes wird minimiert. Dadurch sind unerwünschte Folgen für die auf Raumtemperatur-Messwerten basierende Regelstrategie, insbesondere Komforteinbußen für Raumnutzer, ausgeschlossen.

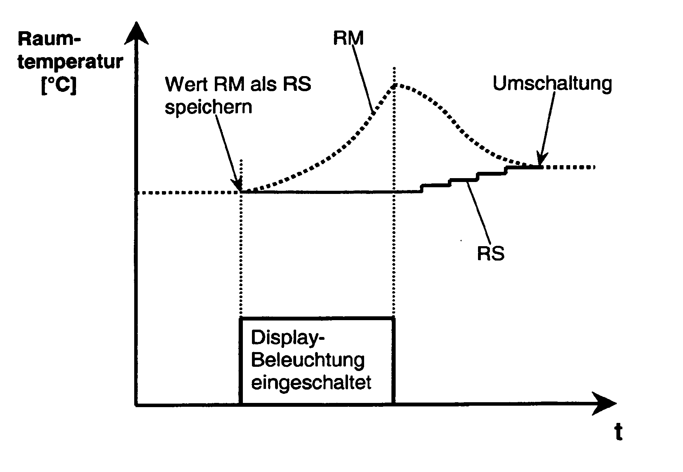

Die Zeichnung stellt ein Ausführungsbeispiel der Erfindung dar und zeigt in einer einzigen Figur den schematischen Verlauf einer Messung der Raumtemperatur für eine Regelung einer Heizungsanlage mit einem Fernbedienungsgerät mit integriertem Raumtemperaturfühler während des Einschaltens der Hintergrundbeleuchtung an einem Display:

Wird am Fernbedienungsgerät die Hintergrundbeleuchtung an einem Display eingeschaltet, so erzeugt nicht nur dieses selbst Wärme, sondern auch am zugeordneten Spannungsregler macht sich die in Betrieb befindliche Displaybeleuchtung als elektrische Last in Form von verstärkter Wärmeentwicklung bemerkbar. Der zu diesem Zeitpunkt gemessene Wert der Raumtemperatur RM wird daher als für die Regelung maßgebender Wert der Raumtemperatur RS gespeichert. Da sich der gemessene Wert der Raumtemperatur RM durch die Wärmeeinwirkung laufend erhöht, muss der gespeicherte Wert der Raumtemperatur RS so lange in die Regelung einfließen, bis zumindest annähernd wieder Normalbedingungen vorherrschen. Dies ist bei einem fallenden Wert der Raumtemperatur RM nach der Abschaltung der Wärme erzeugenden Displaybeleuchtung sowie der Entlastung des daran angeschlossenen Spannungsreglers der Fall, insbesondere wenn sich der gemessene Wert RM an den gespeicherten Wert der Raumtemperatur RS annähert. Nach der Umschaltung arbeitet die Regelung danach wieder mit dem aktuell gemessenen Wert der Raumtemperatur RM.

Für die Umschaltung vom gespeicherten Wert RS auf den aktuell gemessenen Wert der Raumtemperatur RM wird der gespeicherte Wert RS nach dem Abschalten der Displaybeleuchtung allmählich wieder an den aktuell gemessenen Wert RM durch schrittweise Erhöhung angenähert. Der Umschaltpunkt ist erreicht, wenn die beiden aufeinander zulaufenden Werte RS und RM fast gleich sind.

## Patentansprüche

1. Verfahren zur Messung der Raumtemperatur für eine Regelung einer Heizungsanlage mit einem Fernbedienungsgerät, mit einem integrierten Raumtemperaturfühler und Wärme erzeugenden elektronischen Bauteilen, wie einem Spannungsregler und/oder einem beleuchteten Display, in einem Gehäuse des Fernbedienungsgerätes,
**dadurch gekennzeichnet, dass** mit dem Einschalten mindestens eines Wärme erzeugenden elektronischen Bauteils, und/oder eines daran angeschlossenen Stromverbrauchers als elektrische Last, der zu diesem Zeitpunkt gemessene Wert der Raumtemperatur (RM) gespeichert wird und so lange in die Regelung einfließt, bis bei einem fallenden Wert der Raumtemperatur (RM) die Regelung wieder nach dem aktuell gemessenen Wert der Raumtemperatur (RM) arbeitet.

2. Verfahren nach Anspruch 1,
**dadurch gekennzeichnet, dass** die Umschaltung vom gespeicherten Wert (RS) auf den aktuell gemessenen Wert der Raumtemperatur (RM) bei einem fallenden Wert der Raumtemperatur (RM) erfolgt.

3. Verfahren nach Anspruch 1 oder 2,
**dadurch gekennzeichnet, dass** die Umschaltung vom gespeicherten Wert (RS) auf den aktuell gemessenen Wert der Raumtemperatur (RM) nach der Abschaltung des mindestens einen Wärme erzeugenden elektronischen Bauteils oder eines daran angeschlossenen Stromverbrauchers als elektrische Last erfolgt, welche die Speicherung des Wertes der Raumtemperatur (RM) zum Einschaltzeitpunkt auslöst.

4. Verfahren nach einem der Ansprüche 1 bis 3,
**dadurch gekennzeichnet, dass** die Umschaltung vom gespeicherten Wert (RS) auf den aktuell gemessenen Wert der Raumtemperatur (RM) erst bei Annäherung des aktuell gemessenen Wertes (RM) an den gespeicherten Wert (RS) bis auf eine Differenz von etwa 0,2 Kelvin erfolgt.

5. Verfahren nach einem der Ansprüche 1 bis 4,
**dadurch gekennzeichnet, dass** der gespeicherte Wert der Raumtemperatur (RS) nach dem Abschalten des mindestens einen Wärme erzeugenden elektronischen Bauteils oder eines daran angeschlossenen Stromverbrauchers als elektrische Last allmählich wieder dem aktuell gemessenen Wert der Raumtemperatur (RM) angepasst wird, wobei einem fallenden, aktuell gemessenen Wert der Raumtemperatur (RM) ein steigender, für die Regelung maßgebender Wert durch diese Anpassung entgegen kommt.

6. Verfahren nach einem der Ansprüche 1 bis 5,
**dadurch gekennzeichnet, dass** die Anpassung des gespeicherten Wertes der Raumtemperatur (RS) mit einer Zeitkonstante von etwa 13 Minuten erfolgt.

7. Verfahren nach einem der Ansprüche 1 bis 6,
**dadurch gekennzeichnet, dass** der gespeicherte Wert der Raumtemperatur (RS) durchgehend am Display des Fernbedienungsgerätes angezeigt wird, während dieser für die Regelung maßgebend ist.

8. Anordnung zur Messung der Raumtemperatur für eine Regelung einer Heizungsanlage mit einem Fernbedienungsgerät, mit einem integrierten Raumtemperaturfühler und Wärme erzeugenden elektronischen Bauteilen, wie einem Spannungsregler und/oder einem beleuchteten Display, in einem Gehäuse des Fernbedienungsgerätes,
**dadurch gekennzeichnet, dass** der elektrische Anschluss mindestens eines Wärme erzeugenden elektronischen Bauteiles und/oder eines daran angeschlossenen Stromverbrauchers als elektrische Last, so mit der Regelung einer Heizungsanlage verknüpft ist, dass das Einschalten des mindestens einen elektronischen Bauteiles und/oder des daran angeschlossenen Stromverbrauchers ein Signal erzeugt, wodurch der zu diesem Zeitpunkt gemessene Wert der Raumtemperatur (RM) gespeichert wird und so lange in die Regelung einfließt, bis bei einem fallenden Wert der Raumtemperatur (RM) die Regelung wieder nach dem aktuell gemessenen Wert der Raumtemperatur (RM) arbeitet.

## Claims

1. A method for measuring the room temperature for a control of a heating system comprising a remote control device, an integrated room temperature sensor and heat-generating electronic components such as a voltage regulator and/or an illuminated display in a housing of a remote control device, **characterised in that** when at least one heat-generating electronic component and/or a current consumer connected thereto as an electrical load is switched, the value of the room temperature (RM) measured at this time is stored and flows into the control until the control again operates using the currently measured value of the room temperature (RM) at a falling value of the room temperature (RM).

2. The method according to claim 1, **characterised in that** the switchover from the stored value (RS) to the currently measured value of the room temperature (RM) takes place at a falling value of the room temperature (RM).

3. The method according to claim 1 or 2, **characterised in that** the switchover from the stored value (RS) to the currently measured value of the room temperature (RM) takes place after switching off the at least one heat-generating electronic component or a current consumer connected thereto as an electrical load, which triggers the storage of the room temperature (RM) value at the switch-on time.

4. The method according to any one of claims 1 to 3, **characterised in that** the switchover from the stored value (RS) to the currently measured value of the room temperature (RM) only takes place when the currently measured value (RM) approaches the stored value (RS) apart from a difference of about 0.2 Kelvin.

5. The method according to any one of claims 1 to 4, **characterised in that** after switching off the at least one heat-generating electronic component or a current consumer connected thereto as an electrical load, the stored value of the room temperature (RS) is gradually matched to the currently measured value of the room temperature (RM), wherein a falling actually measured value of the room temperature (RM) approaches an increasing value decisive for the control through this matching.

6. The method according to any one of claims 1 to 5, **characterised in that** the matching of the stored value of the room temperature (RS) takes place with a time constant of about 13 minutes.

7. The method according to any one of claims 1 to 6, **characterised in that** the stored value of the room temperature (RS) is displayed continuously on the display of the remote control device whilst this is decisive for the control.

8. An arrangement for measuring the room temperature for a control of a heating system comprising a remote control device, an integrated room temperature sensor and heat-generating electronic components such as a voltage regulator and/or an illuminated display in a housing of a remote control device, **characterised in that** the electrical connection of at least one heat-generating electronic component and/or a current consumer connected thereto as an electrical load is switched is linked to the control of a heating system in such a manner that switching on the at least one heat-generating electronic component and/or a current consumer connected thereto generates a signal whereby the value of the room temperature (RM) measured at this time is stored and flows into the control until the control again operates using the currently measured value of the room temperature (RM) at a falling value of the room temperature (RM).

## Revendications

1. Procédé pour mesurer la température ambiante pour un réglage d'une installation de chauffage avec un appareil à télécommande, avec une sonde de température ambiante intégrée et des composants électroniques générant de la chaleur, comme un régulateur de tension et/ou un écran éclairé, dans un boîtier de l'appareil à télécommande, **caractérisé en ce que** la valeur mesurée à cet instant de la température ambiante (RM) est mémorisée avec l'enclenchement d'au moins un composant électronique générant de la chaleur et/ou d'un consommateur électrique raccordé comme charge électrique et est intégrée dans le réglage jusqu'à ce que, lors d'une valeur décroissante de la température ambiante (RM), le réglage travaille à nouveau selon la valeur mesurée actuellement de la température ambiante (RM).

2. Procédé selon la revendication 1, **caractérisé en ce que** la commutation de la valeur mémorisée (RS) sur la valeur mesurée actuellement de la température ambiante (RM) s'effectue dans le cas d'une valeur décroissante de la température ambiante (RM).

3. Procédé selon la revendication 1 ou 2, **caractérisé en ce que** la commutation de la valeur mémorisée (RS) sur la valeur mesurée actuellement de la température ambiante (RM) s'effectue après la déconnexion du au moins un composant électronique générant de la chaleur ou d'un consommateur électrique raccordé à ce composant en tant que charge électrique, qui déclenche la mémorisation de la valeur de la température ambiante (RM) au moment d'enclenchement.

4. Procédé selon l'une quelconque des revendications 1 à 3, **caractérisé en ce que** la commutation de la valeur mémorisée (RS) sur la valeur mesurée actuellement de la température ambiante (RM) ne s'effectue qu'en cas de rapprochement de la valeur mesurée actuellement (RM) de la valeur mémorisée (RS) jusqu'à une différence d'environ 0,2 Kelvin.

5. Procédé selon l'une quelconque des revendications 1 à 4, **caractérisé en ce que** la valeur mémorisée de la température ambiante (RS) est adaptée, après la déconnexion du au moins un composant électronique générant de la chaleur ou d'un consommateur électrique raccordé à ce composant en tant que charge électrique, peu à peu à nouveau à la valeur mesurée actuellement de la température ambiante (RM), une valeur croissante et déterminante pour le réglage s'opposant par cet ajustage à une valeur décroissante et mesurée actuellement de la température ambiante (RM).

6. Procédé selon l'une quelconque des revendications 1 à 5, **caractérisé en ce que** l'adaptation de la valeur mémorisée de la température ambiante (RS) intervient avec une constante de temps d'environ 13 minutes.

7. Procédé selon l'une quelconque des revendications 1 à 6, **caractérisé en ce que** la valeur mémorisée de la température ambiante (RS) est affichée de façon continue sur l'écran de l'appareil à télécommande, alors que celle-ci est déterminante pour le réglage.

8. Dispositif pour mesurer la température ambiante pour un réglage d'une installation de chauffage avec un appareil à télécommande, avec une sonde de température ambiante intégrée et des composants électroniques générant de la chaleur, comme un régulateur de tension et/ou un écran éclairé, dans un boîtier de l'appareil à télécommande, **caractérisé en ce que** le raccordement électrique d'au moins un composant électronique générant de la chaleur et/ou d'un consommateur électrique raccordé à ce composant en tant que charge électrique est associé au réglage d'une installation de chauffage de telle sorte que la mise en route du au moins un composant électronique et/ou du consommateur électrique raccordé à ce composant génère un signal, de sorte que la valeur, mesurée à cet instant, de la température ambiante (RM) est mémorisée et intégrée dans le réglage jusqu'à ce que, dans le cas d'une valeur décroissante de ladite température ambiante (RM), le réglage travaille à nouveau selon la valeur mesurée actuellement de la température ambiante (RM).
